# FASCICULE DE BREVET EUROPEEN

(11) **EP 0 992 515 B1**
(45) Date de publication et mention de la délivrance du brevet: **13.10.2004**
(21) Numéro de dépôt: 99203152.6
(22) Date de dépôt: 24.09.1999
(51) Int. Cl.: C08F 4/02, C08F 10/00

(54) **Catalyseur destiné à la polymérisation des oléfines, procédé pour sa fabrication et utilisation**
Katalysator für die Olefinpolymerisation, Verfahren zu seiner Herstellung und Verwendung
Catalyst for the polymerisation of olefins, process for its production and use

(30) Priorité: 05.10.1998 BE 9800719
(43) Date de publication de la demande: 12.04.2000
(73) Titulaire: SOLVAY POLYOLEFINS EUROPE - BELGIUM (Société Anonyme), 1050 Bruxelles (BE)
(72) Inventeur: Detrez, Charles, 1080 Bruxelles (BE); Koch, Benoit, 4280 Hannut (BE)
(74) Mandataire: Smith, Julian Philip Howard

(56) Documents cités:
- EP-A- 0 529 377
- WO-A-94/26791

## Description

La présente invention concerne un catalyseur et, plus particulièrement, un catalyseur destiné à la polymérisation des oléfines comprenant une composition catalytique solide à base de métal de transition, de magnésium et d'halogène déposée sur un support inorganique. Elle concerne également un procédé pour la fabrication d'un tel catalyseur. Elle concerne enfin l'utilisation dudit catalyseur, en combinaison avec un cocatalyseur du type des composés organométalliques, pour la polymérisation et la copolymérisation des oléfines et, en particulier de l'éthylène.

Il est connu d'utiliser pour la polymérisation à basse pression des oléfines, et en particulier de l'éthylène, des systèmes catalytiques comprenant un catalyseur contenant un métal de transition, du magnésium et de l'halogène (catalyseurs dits de Ziegler-Natta) et un cocatalyseur du type des composés organométalliques des métaux des groupes IA, IIA, IIB, IIIA et IVA du tableau périodique. Ces systèmes catalytiques connus présentent des avantages extrêmement importants, tels qu'une activité et une productivité très élevées. Leur préparation est extrêmement simple et ne conduit à aucun sous-produit polluant. Enfin, leur morphologie permet de polymériser en suspension en continu avec une teneur relative en polymère très élevée et donc une quantité relative de diluant à traiter avant recyclage très faible. Cependant, quoique de granulométrie régulière, les polymères obtenus en particules directement à leur intervention ont une grosseur moyenne des particules relativement faible.

Il est connu de faire appel à des solides catalytiques déposés sur un support pour pouvoir découpler le contrôle de la granulométrie-morphologie de celui des propriétés chimiques des polymères produits. En outre, les solides catalytiques déposés sur un support permettent d'obtenir des catalyseurs dont la granulométrie soit plus importante et qui, de ce fait, sont plus appropriés à la polymérisation en phase gazeuse.

Dans la demande de brevet WO-A-91/07443, on préconise d'imprégner un support inorganique au moyen d'une solution d'halogénure de magnésium dans un alkylester d'acide monocarboxylique, puis, après séchage, de traiter le support dans l'ordre avec un composé organométallique d'un métal des groupes IA-IIIA (typiquement un alkylaluminium ou un composé de silicone) et enfin avec un composé d'un métal de transition.

Dans la demande de brevet WO-A-91/09881, on décrit l'imprégnation d'un support poreux en oxyde inorganique au moyen d'une solution dans un solvant inerte du produit de la réaction d'un composé de magnésium, d'un composé de titane, d'un composé d'aluminium, suivie de l'élimination du solvant, puis d'une étape de chloration.

Dans la demande de brevet WO-A-94/00498, on décrit la fabrication d'une composition catalytique obtenue par mise en contact d'un support en oxyde inorganique ayant une faible teneur en groupements hydroxyles en surface avec une solution d'imprégnation contenant un composé de magnésium, un alcool et un composé tétravalent de titane et la chloration subséquente du support.

Parmi les supports inorganiques envisagés en toute généralité dans ces documents figurent les oxydes de silicium (silice), d'aluminium (alumine), leurs mélanges et d'autres silicates, les oxydes de chrome, de titane, de zirconium, la silice étant dans tous les cas particulièrement préférée et spécifiquement décrite, le plus souvent une silice prétraitée en vue d'éliminer les groupements hydroxyles en surface. Les solides catalytiques supportés décrits dans ces documents conduisent à une activité accrue en polymérisation des oléfines.

Enfin, dans le document WO-A-095/35323, on préconise l'imprégnation d'un support inorganique, tel que et de préférence de la silice, dans l'ordre, au moyen d'un chlorure d'alkylaluminium (agent chlorant et cocatalyseur interne), puis au moyen d'un composé de magnésium et enfin au moyen d'un composé de titane contenant du chlore. Ce mode opératoire spécifique est réputé conduire à un solide catalytique dont l'activité est indépendante de la quantité d'agent de transfert mis en oeuvre à la polymérisation.

On a maintenant constaté que les compositions catalytiques solides de type Ziegler-Natta déposées sur de la silice ne présentent pas une réponse optimale à l'hydrogène.

La présente invention a pour objet de procurer des catalyseurs présentant une réponse à l'hydrogène particulièrement élevée, utilisables pour la polymérisation des oléfines.

A cet effet, l'invention concerne un catalyseur destiné à la polymérisation des oléfines comprenant une composition catalytique solide à base de métal de transition, de magnésium et d'halogène déposée sur un support inorganique, caractérisé en ce que le support inorganique comprend du phosphate d'aluminium (A) et au moins un oxyde inorganique (B) choisi parmi la silice et l'alumine.

L'invention est basée sur la constatation surprenante que le recours à un support comprenant du phosphate d'aluminium et un oxyde inorganique choisi parmi la silice et l'alumine conduit à des catalyseurs dont la réponse à l'hydrogène est largement supérieure à celle d'un catalyseur similaire dans lequel le support est de la silice seule.

La teneur du support en chacun de ses constituants peut varier dans une assez large mesure. Selon une variante avantageuse de l'invention, le support contient du phosphate d'aluminium (A) et un oxyde inorganique (B) choisi parmi la silice et l'alumine dans un pourcentage molaire (A) : (B) de (90 à 5) : (10 à 95). De préférence, le support contient du phosphate d'aluminium (X), de la silice (Y) et de l'alumine (Z) et plus particulièrement encore du phosphate d'aluminium (X), de la silice (Y) et de l'alumine (Z) dans un pourcentage molaire de (1 à 85 ) : (10 à 95 ) : (1 à 80).

Des supports de ce type et des procédés pour les fabriquer sont connus et décrits dans le brevet BE-A-1 007 148 au nom de SOLVAY POLYOLEFINS EUROPE - BELGIUM.

Les supports mis en oeuvre dans l'invention présentent en général une surface spécifique de 100 à 800 m²/g, mesurée selon la méthode volumétrique BET de la norme britannique BS 4359/1 (1984). Le plus souvent, la surface spécifique ne dépasse pas 500 m²/g. De préférence, elle est de 150 à 400 m²/g. Leur température de cristallisation est de préférence supérieure à 700°C. Cette température est déterminée en soumettant un échantillon de support à un traitement thermique à différentes températures (500°C, 700°C, 800°C, 950°C, 1050°C) et en examinant ensuite, après chaque traitement thermique, cet échantillon par diffraction des rayons X. Les supports selon l'invention présentent en général un volume poreux d'environ 0,5 à 4 cm³/g. Le volume poreux est la somme du volume poreux constitué de pores de rayon inférieur ou égal à 75 A, mesuré selon la méthode de pénétration à l'azote (BET) selon la technique volumétrique décrite dans la norme britannique BS 4359/1 (1984) et du volume poreux mesuré par la méthode de pénétration au mercure au moyen de porosimètre de type PORO 2000 commercialisé par CARLO ERBA CO, selon la norme belge B 05-202 (1976). De préférence, les supports selon l'invention présentent un volume poreux d'environ 1 à 3 cm³/g.

Le support mis en oeuvre dans l'invention présente habituellement un poids spécifique apparent supérieur ou égal à 50 kg/m³, en particulier à 100 kg/m³; il est généralement au maximum égal à 500 kg/m³, typiquement à 300 kg/m³. Le poids spécifique apparent est mesuré par écoulement libre selon le mode opératoire suivant : dans un récipient cylindrique de 50 cm³ de capacité, on verse la poudre du support à analyser en évitant de la tasser, depuis une trémie dont le bord inférieur est disposé 20 mm au-dessus du bord supérieur du récipient. On pèse ensuite le récipient rempli de la poudre, on déduit la tare du poids relevé et on divise le résultat obtenu (exprimé en g) par 50. Les supports mis en oeuvre dans l'invention se présentent généralement à l'état de poudre dont les grains ont un diamètre de 10 à 250 µm, le plus souvent de 25 à 150 µm. Il est avantageux de les soumettre à un traitement thermique avant de procéder au dépôt de la composition catalytique. Ce traitement thermique s'effectue généralement à une température au moins égale à 150°C et qui, par ailleurs, ne dépasse pas 1000°C. Le plus souvent, le traitement thermique s'effectue à une température au moins égale à 250°C et qui ne dépasse pas 875°C. La durée du traitement thermique s'élève habituellement à 2 heures au moins et ne dépasse généralement pas 18 heures.

Le catalyseur selon l'invention (constitué de la composition catalytique solide et du support inorganique) contient le plus souvent, par kg, au moins 2 g de métal de transition. La teneur du catalyseur en métal de transition ne dépasse habituellement pas 100 g par kg de catalyseur. Le plus souvent, la teneur en métal de transition est d'au moins 5 g et, par ailleurs, de pas plus de 60 g par kg de catalyseur.

Selon l'invention le catalyseur comprend une composition catalytique solide à base de métal de transition, de magnésium et d'halogène déposée sur un support inorganique tel que défini ci-dessus. Les catalyseurs selon l'invention peuvent être obtenus par tout procédé de préparation connu mettant en oeuvre, séparément ou en mélange et dans un ordre quelconque, un composé de magnésium, un composé de métal de transition et un composé organoaluminique éventuellement halogéné, ainsi qu'un support inorganique, et, notamment par les procédés décrits dans l'art antérieur cité plus haut.

Les compositions catalytiques solides déposées sur un support selon l'invention résultent avantageusement de la réaction, dans une première étape, d'au moins un composé de magnésium avec au moins un composé d'un métal de transition, jusqu'à l'obtention d'un complexe liquide et, dans une étape ultérieure, du traitement du complexe liquide au moyen d'un composé organoaluminique éventuellement halogéné pour recueillir une composition catalytique solide. Les compositions catalytiques solides de ce type sont connues en tant que telles et décrites, par exemple, dans le brevet BE-A-1 008 702 au nom de SOLVAY POLYOLEFINS EUROPE - BELGIUM.

Le composé de magnésium est choisi parmi les composés oxygénés organiques et les composés halogénés du magnésium. Par composé oxygéné organique de magnésium, on entend désigner tous les composés où un radical organique est lié au magnésium par l'intermédiaire de l'oxygène, c'est-à-dire tous les composés contenant au moins une séquence de liaisons magnésium-oxygène-radical organique par atome de magnésium. Les radicaux organiques liés au magnésium par l'intermédiaire de l'oxygène sont choisis en général parmi les radicaux comprenant jusqu'à 20 atomes de carbone et, plus particulièrement, parmi ceux comprenant jusqu'à 10 atomes de carbone. De bons résultats sont obtenus lorsque ces radicaux comprennent de 2 à 6 atomes de carbone. Ces radicaux peuvent être saturés ou insaturés, à chaîne ramifiée, à chaîne droite ou cyclique. Ils sont choisis de préférence parmi les radicaux hydrocarbonés et en particulier parmi les radicaux alkyles (linéaires ou branchés), alkényles, aryles, cycloalkyles, arylalkyles, acyles et leurs dérivés substitués.

Les composés oxygénés organiques de magnésium peuvent comporter, en plus des radicaux organiques liés au magnésium par l'intermédiaire de l'oxygène, d'autres radicaux, tels que par exemple les radicaux -OH, -(SO₄)_{1/2}, -NO₃, - (PO₄)_{1/3}, -(CO₃)_{1/2} et -ClO₄. Il peut s'agir également de radicaux organiques liés directement au magnésium par le carbone.

Parmi les composés oxygénés organiques de magnésium utilisables, on peut citer les alkoxydes (tels que l'éthylate et le cyclohexanolate), les alkylalkoxydes (tels que l'éthyléthylate), les hydroxyalkoxydes (tels que l'hydroxyméthylate), les phénoxydes (tels que le naphténate), les carboxylates éventuellement hydratés (tels que l'acétate et le benzoate). Il peut également s'agir des composés oxygénés azotés organiques, c'est-à-dire des composés comprenant des séquences de liaisons magnésium-oxygène-azote-radical organique (tels que les oximates, en particulier le butyloximate, les sels d'acides hydroxylamines, en particulier le dérivé de la N-nitroso-N-phényl-hydroxylamine), les chélates, c'est-à-dire les composés oxygénés organiques dans lesquels le magnésium possède au moins une séquence de liaisons normales du type magnésium-oxygène-radical organique et au moins une liaison de coordination de manière à former un hétérocycle dans lequel le magnésium est inclus (tels que les énolates, en particulier l'acétylacétonate), les silanolates, c'est-à-dire des composés comprenant des séquences de liaisons magnésium-oxygène-silicium-radical hydrocarboné (tels que le triphénylsilanolate). On peut également citer à titre d'exemples de composés oxygénés organiques de magnésium ceux comprenant plusieurs radicaux organiques différents (tels que le méthoxyéthylate de magnésium), les alkoxydes et phénoxydes complexes du magnésium et d'un autre métal (tels que Mg[Al(OR)₄]₂) et les mélanges de deux ou de plusieurs des composés oxygénés organiques de magnésium définis ci-dessus.

Par composé halogéné de magnésium, on entend désigner tous les composés comprenant au moins une liaison magnésium-halogène. L'halogène peut être le fluor, le chlore, le brome ou l'iode. De préférence, l'halogène est le chlore.

Parmi les composés halogénés de magnésium, on peut citer les dihalogénures, de préférence contenant au maximum une molécule d'eau par molécule de dihalogénure, les dihalogénures complexés (tels que le MgCl₂.6NH₃ ou MgCl₂.6CH₃OH), les composés comprenant, outre la liaison magnésium-halogène, un radical organique, lié au magnésium par l'intermédiaire de l'oxygène (tels que le Mg(OH)Cl ou Mg(O-CH₃)Cl). Il peut également s'agir des composés comprenant, outre la liaison magnésium-halogène, une liaison magnésium-radical organique (tels que Mg(C₂H₅)Cl), les produits de l'hydrolyse des halogénures hydratés de magnésium, pour autant que ces produits contiennent encore des liaisons magnésium-halogène, les compositions mixtes comprenant des composés halogénés et oxygénés de magnésium (tels que MgCl₂.MgO.H₂O) et les mélanges de deux ou de plusieurs des composés halogénés de magnésium définis ci-dessus.

Parmi tous les composés de magnésium qui conviennent, on utilise de préférence ceux qui ne contiennent par atome de magnésium que des liaisons magnésium-oxygène-radical organique et/ou des liaisons magnésium-halogène à l'exclusion de toute autre liaison. Les meilleurs résultats sont obtenus avec les composés oxygénés organiques, en particulier avec ceux comprenant seulement par atome de magnésium des liaisons magnésium-oxygène-radical organique. Les alkoxydes de magnésium sont particulièrement préférés. Les meilleurs résultats sont obtenus avec les dialkoxydes de magnésium, en particulier le diéthylate de magnésium.

Le composé d'un métal de transition est choisi parmi les composés oxygénés organiques et les composés halogénés du métal de transition.

Par composé oxygéné organique d'un métal de transition, on entend désigner tous les composés où un radical organique est lié au métal de transition par l'intermédiaire de l'oxygène, c'est-à-dire tous les composés comprenant au moins une séquence de liaisons métal de transition-oxygène-radical organique par atome de métal de transition. Les radicaux organiques sont conformes à ceux définis ci-dessus pour les composés oxygénés organiques de magnésium.

Le métal de transition est généralement choisi parmi les métaux des groupes IVB et VB du tableau périodique.

Le métal de transition est avantageusement choisi parmi le titane, le zirconium, l'hafnium et le vanadium. Le titane et le zirconium et leurs mélanges conviennent bien. Le titane est particulièrement préféré. Dans le cas du titane, du zirconium ou de l'hafnium, on utilise de préférence les composés de métal de transition tétravalent parce qu'ils sont plus souvent liquides et en tout cas plus souvent et mieux solubles que ceux où le métal de transition se trouve à une valence inférieure à 4. Les composés oxygénés organiques de métal de transition utilisables peuvent également comprendre des liaisons métal de transition-oxygène-métal de transition.

On peut représenter les composés oxygénés organiques de métal de transition par la formule générale MOₓ(OR')ₘ₋₂ₓ où M représente le métal de transition de valence m, R' représente un radical organique tel que défini plus haut et x est un nombre tel que 0 ≤ x ≤ (m-1)/2. On préfère utiliser les composés où x est tel que 0 ≤ x ≤ (m-2)/2.

Il va de soi que les composés oxygénés organiques de métal de transition peuvent comprendre plusieurs radicaux organiques différents.

Parmi les composés oxygénés organiques de métal de transition, on peut citer les alkoxydes (tels que Ti(O-nC₄H₉)₄), les phénoxydes (tels que Zr(OC₆H₅)₄), les oxyalkoxydes (tels que HfO(OC₂H₅)₂), les alkoxydes condensés (tels que Ti₂O(O-iC₃H₇)₆), les carboxylates (tels que Zr(OOCCH₃)₄) et les énolates (tels que l'acétylacétonate de hafnium).

Par composé halogéné d'un métal de transition, on entend désigner tous les composés comprenant au moins une liaison métal de transition-halogène. L'halogène est conforme à celui défini plus haut pour les composés halogénés de magnésium. On préfère le chlore.

Parmi les composés halogénés d'un métal de transition, on peut citer les halogénures, en particulier les tétrahalogénures (tels que TiCl₄), les halogénures complexés (tels que ZrCl₄.6NH₃), les halogénures complexes d'un métal de transition et d'un métal alcalin (tels que Na₂TiCl₆), les oxyhalogénures (tels que HfOCl₂) et les halogénoalkoxydes (tels que Ti(OC₂H₅)₂Cl₂ ou Zr(OiC₃H₇)₃Cl). Il va de soi qu'on peut utiliser plusieurs composés de métal de transition simultanément. Lorsque l'on souhaite obtenir une polyoléfine présentant une large distribution des masses moléculaires, il peut s'avérer préférable d'utiliser des composés de différents métaux de transition, en particulier un composé de titane et un composé de zirconium.

Parmi tous les composés d'un métal de transition qui conviennent, on utilise de préférence ceux qui ne contiennent par atome de métal de transition que des liaisons métal de transition-oxygène-radical organique et/ou des liaisons métal de transition-halogène à l'exclusion de toute autre liaison. Les meilleurs résultats sont obtenus avec les composés oxygénés organiques d'un métal de transition, en particulier avec ceux comprenant seulement par atome de métal de transition des liaisons métal de transition-oxygène-radical organique. Les alkoxydes conviennent bien. Les meilleurs résultats sont obtenus avec les tétraalkoxydes du titane ou du zirconium, en particulier le tétrabutylate de titane ou de zirconium.

On peut bien entendu mettre en oeuvre simultanément plusieurs composés de magnésium différents. De même, on peut aussi mettre en oeuvre simultanément plusieurs composés différents d'un métal de transition ou plusieurs composés dont le métal de transition est différent. La réaction de la première étape peut être réalisée par toute méthode connue adéquate pourvu qu'elle permette l'obtention d'un complexe à l'état liquide. Lorsque le composé de magnésium et/ou le composé d'un métal de transition sont liquides dans les conditions opératoires de la réaction, il est souhaitable d'opérer la réaction par simple mélange de ces réactifs en l'absence de solvant ou de diluant. Toutefois, on peut opérer la réaction en présence d'un diluant lorsque la quantité de liquide présente dans le milieu de réaction n'est pas suffisante pour que la réaction soit complète ou lorsque les deux réactifs sont solides dans les conditions opératoires de la réaction.

Le composé organoaluminique éventuellement halogéné est choisi parmi les composés organoaluminiques répondant à la formule générale AlRₙ X ₃₋ₙ dans laquelle R est un radical hydrocarboné, X est un halogène et n est inférieur ou égal à 3.

Le composé organoaluminique éventuellement halogéné répond avantageusement à la formule AlRₙX₃₋ₙ dans laquelle R est un radical hydrocarboné comprenant jusqu'à 20 atomes de carbone, X est de l'halogène et n est inférieur ou égal à 3. De préférence, le radical contient jusqu'à 6 atomes de carbone. On obtient de bons résultats lorsque R est un radical alkyle (linéaire ou branché), cycloalkyle, arylalkyle, aryle et alkylaryle. Les meilleurs résultats sont obtenus lorsque R représente un radical alkyle linéaire ou branché. X est généralement choisi parmi le fluor, le chlore, le brome et l'iode. Le chlore convient particulièrement bien. De préférence n ne dépasse pas 1,5, plus spécialement pas 1. A titre d'exemples de composés organoaluminiques non halogénés, on peut citer le triéthylaluminium et le triisobutylaluminium. A titre d'exemples de composés organoaluminiques halogénés utilisables dans l'invention, on peut citer le trichlorure d'aluminium [AlCl₃], le dichlorure d'éthylaluminium [Al(C₂H₅)Cl₂], le sesquichlorure d'éthylaluminium [Al₂(C₂H₅)₃Cl₃] et le chlorure de diéthylaluminium [Al(C₂H₅)₂Cl]. On préfère le dichlorure d'éthylaluminium ou le dichlorure d'isobutylaluminium.

L'invention concerne également un procédé pour la fabrication du catalyseur selon l'invention. Ce procédé est caractérisé en ce que, dans une première étape, on met en réaction au moins un composé de magnésium avec au moins un composé de métal de transition pour former un complexe liquide, on imprègne le support inorganique au moyen dudit complexe liquide et, dans une étape ultérieure, on précipite ledit complexe liquide sur le support au moyen d'un composé organoaluminique éventuellement halogéné pour recueillir un catalyseur.

Les composés de métal de transition, de magnésium et organoaluminiques éventuellement halogénés mis en oeuvre dans le procédé de fabrication du catalyseur selon l'invention sont ceux définis plus haut en rapport avec le mode d'obtention de la composition catalytique solide.

La quantité mise en oeuvre du composé d'un métal de transition est définie par rapport à la quantité mise en oeuvre du composé de magnésium. Elle peut varier dans une large mesure. En général, elle est d'au moins 0,01 mole de métal de transition présent dans le composé de métal de transition par mole de magnésium présent dans le composé de magnésium, en particulier d'au moins 0,02 mole, les valeurs d'au moins 0,05 étant les préférées. La quantité est habituellement d'au plus 20 moles de métal de transition présent dans le composé d'un métal de transition par mole de magnésium présent dans le composé de magnésium, plus précisément d'au plus 10 moles, les valeurs d'au plus 5 moles étant recommandées.

La température à laquelle on met en présence le composé de magnésium et le composé d'un métal de transition dans la première étape de la préparation du catalyseur dépend de la nature des réactifs et est de préférence inférieure à la température de décomposition des réactifs et du complexe liquide obtenu à la suite de la réaction. Elle est généralement d'au moins -20 °C, en particulier d'au moins 0 °C, les températures d'au moins 20 °C étant les plus courantes. La température est habituellement d'au plus 200 °C, plus spécialement d'au plus 180 °C, les températures d'au plus 150 °C étant avantageuses, par exemple d'environ 140 °C.

La durée de la première étape dépend de la nature des réactifs et des conditions opératoires et est avantageusement suffisamment longue pour obtenir une réaction complète entre les réactifs. La durée peut varier généralement de 10 minutes à 20 heures, plus précisément de 2 à 15 heures, par exemple de 4 à 10 heures.

La pression sous laquelle on effectue la réaction de la première étape et la vitesse d'addition des réactifs ne sont pas des facteurs critiques. Pour des raisons de commodité, on travaille généralement sous pression atmosphérique; la vitesse d'addition est choisie en général de manière à ne pas provoquer un échauffement brusque du milieu réactionnel dû à une auto-accélération éventuelle de la réaction. On agite généralement le milieu réactionnel de manière à favoriser son homogénéisation pendant la durée de la réaction. La réaction peut être réalisée en continu ou en discontinu.

A l'issue de la première étape de la préparation du catalyseur, on recueille un complexe liquide du composé de magnésium et du composé d'un métal de transition, que l'on peut mettre en oeuvre tel quel dans l'étape subséquente d'imprégnation du support inorganique ou que l'on peut éventuellement stocker dans un diluant, de préférence inerte, afin de le récupérer intact ultérieurement et de le mettre en oeuvre en présence du diluant. Le diluant est le plus souvent choisi parmi les hydrocarbures aliphatiques ou cycloaliphatiques, de préférence contenant jusqu'à 20 atomes de carbone tels que par exemple les alcanes comme l'isobutane, le pentane, l'hexane, l'heptane ou le cyclohexane ou leurs mélanges. L'hexane convient particulièrement bien.

L'imprégnation du support inorganique au moyen du complexe liquide peut s'effecteur de toute manière appropriée. Habituellement, elle s'effectue à une température au moins égale à -10°C et qui, par ailleurs, ne dépasse pas 150°C. Le plus souvent, la température de l'imprégnation s'élève à 20°C au moins et ne dépasse pas 100°C. D'excellents résultats sont obtenus avec des températures d'imprégnation allant de 25 à 60°C. La durée et la pression à laquelle s'effectue l'imprégnation ne constituent pas des paramètres critiques. Le plus souvent l'imprégnation s'effectue à pression atmosphérique.

La quantité de complexe liquide imprégnée dans le support inorganique est choisie de manière à ce que le catalyseur contienne in fine au moins 2 g et, par ailleurs, pas plus de 100 g de métal de transition par kg et, de préférence, au moins 5 g et pas plus de 60 g de métal de transition par kg de catalyseur.

Suivant une première variante du procédé de fabrication du catalyseur, on sèche le support inorganique imprégné au moyen du complexe liquide avant de le mettre en contact avec le composé organoaluminique éventuellement halogéné. Le séchage s'effectue avantageusement sous balayage avec de l'azote à une température au moins égale à 20°C et qui, par ailleurs, ne dépasse pas 150°C. Le plus souvent, le séchage a lieu à une température d'au moins 40°C et qui ne dépasse pas 100°C. Le séchage est considéré comme étant terminé lorsque le support imprégné présente une coulabilité similaire à celle du support avant imprégnation.
Suivant une seconde variante particulièrement préférée, le support inorganique imprégné avec le complexe liquide est directement mis en contact avec le composé organoaluminique éventuellement halogéné.

Cette variante présente l'avantage d'être particulièrement simple (pas d'étape intermédiaire de séchage du support imprégné avec le complexe liquide) et de conduire à des catalyseurs présentant une réponse à l'hydrogène nettement améliorée.

La préparation de la composition catalytique solide comprend une étape ultérieure, que l'on appelle l'étape de précipitation et qui a pour fonction de réduire la valence du métal de transition et simultanément d'halogéner, le cas échéant, le composé de magnésium et/ou le composé de métal de transition, c'est-à-dire de substituer les groupements alkoxy présents dans le composé de magnésium et/ou dans le composé de métal de transition par des halogènes, de sorte que le complexe liquide obtenu à la première étape soit précipité en une composition catalytique solide.

Le traitement au moyen du composé organoaluminique éventuellement halogéné dans l'étape ultérieure de précipitation de la composition catalytique sur le support inorganique peut être effectué par tout moyen connu adéquat, et de préférence en ajoutant progressivement le composé organoaluminique éventuellement halogéné au support inorganique imprégéné du complexe liquide issu de la première étape.

La quantité de composé organoaluminique éventuellement halogéné à mettre en oeuvre dépend des quantités mises en oeuvre du composé de magnésium et du composé d'un métal de transition et est avantageusement suffisante pour obtenir le taux de réduction souhaité et, le cas échéant, le taux d'halogénation voulu. En pratique, on n'a pas intérêt à mettre en oeuvre une quantité supérieure à la quantité minimale nécessaire pour obtenir une réduction et, le cas échant, une halogénation complète car tout excès mis en oeuvre conduit à une augmentation de la teneur en aluminium dans le catalyseur, ce qui n'est pas souhaitable. En général, la quantité est d'au moins 0,5 mole d'aluminium par mole mise en oeuvre de métal de transition, de préférence d'au moins 1 mole, les valeurs d'au moins 2 moles étant les plus courantes; elle est couramment d'au plus 50 moles d'aluminium par mole mise en oeuvre de métal de transition, en particulier d'au plus 30 moles, les valeurs d'au plus 20 moles étant avantageuses.

La température à laquelle l'étape de précipitation du complexe liquide est réalisée est avantageusement inférieure à la température d'ébullition, sous pression ordinaire, du composé organoaluminique éventuellement halogéné. Elle est habituellement d'au moins -20 °C, plus particulièrement d'au moins 0 °C, les températures d'au moins 20 °C étant recommandées. La température ne dépasse pas le plus souvent 150 °C, plus spécialement pas 100 °C, les températures d'au plus 80 °C étant les plus courantes.

La durée de l'étape de précipitation du complexe liquide est de préférence suffisante pour obtenir une précipitation complète. Elle peut varier de 1 minute à 10 heures, plus précisément de 10 minutes à 8 heures, par exemple de 0,5 à 5 heures.

La pression sous laquelle on effectue l'étape de précipitation du complexe liquide n'est pas un facteur critique. Pour des raisons de commodité, on travaille généralement sous pression atmosphérique. La vitesse d'addition des réactifs est choisie en général de manière à ne pas provoquer un échauffement brusque du milieu réactionnel dû à une auto-accélération éventuelle de la réaction. On agite généralement le milieu réactionnel de manière à favoriser son homogénéisation pendant la durée de la réaction. La réaction peut être réalisée en continu ou en discontinu.

A l'issue de l'étape de précipitation du complexe liquide au moyen du composé organoaluminique éventuellement halogéné, on recueille un catalyseur constitué d'un précipité homogène (les constituants étant coprécipités à partir d'un complexe liquide), sur un support inorganique, d'un mélange essentiellement amorphe d'un halogénure de magnésium, d'un halogénure du métal de transition et, le cas échéant, de composés partiellement réduits et/ou partiellement halogénés, ainsi que, éventuellement d'un donneur d'électrons. Il s'agit de complexes chimiquement liés, produits de réactions chimiques, et non pas du résultat de mélanges ou de phénomènes d'adsorption. En effet, il est impossible de dissocier l'un ou l'autre des constituants de ces complexes en utilisant des méthodes de séparation purement physiques.

L'étape de précipitation du complexe liquide peut être avantageusement suivie d'un traitement de mûrissage qui a pour fonction de poursuivre la réaction de précipitation et de permettre l'obtention de catalyseur ayant une résistance améliorée au vieillissement. Le mûrissage est effectué à une température généralement équivalente ou supérieure à celle à laquelle a lieu la précipitation. Il est effectué pendant une durée non critique allant de 5 minutes à 12 heures en général, de préférence pendant au moins 0,5 heure.

Les catalyseurs selon l'invention sont particulièrement adaptés à la polymérisation des oléfines. L'invention concerne aussi l'utilisation de ces catalyseurs en combinaison avec un cocatalyseur choisi parmi les composés organométalliques d'un métal des groupes IA, IIA, IIB, IIIA et IV A pour la polymérisation des oléfines.

Le composé organométallique qui sert d'activateur du catalyseur et appelé couramment "cocatalyseur" peut être choisi parmi les composés organométalliques du lithium, du magnésium, du zinc, de l'aluminium ou de l'étain. Les meilleurs résultats sont obtenus avec les composés organoaluminiques.

On peut utiliser à titre de composé organométallique des composés totalement alkylés dont les chaînes alkyles comprennent jusqu'à 20 atomes de carbone et sont droites ou ramifiées tels que par exemple le n-butyllithium, le diéthylmagnésium, le diéthylzinc, le tétraéthylétain, le tétrabutylétain et les trialkylaluminiums. On peut également utiliser les hydrures d'alkylmétaux dans lesquels les radicaux alkyles comprennent également jusqu'à 20 atomes de carbone tels que l'hydrure de diisobutylaluminium et l'hydrure de triméthylétain. Conviennent également les alkylhalogénures de métaux dans lesquels les radicaux alkyles comprennent aussi jusqu'à 20 atomes de carbone tels que le sesquichlorure d'éthylaluminium, le chlorure de diéthylaluminium et le chlorure de diisobutylaluminium. On peut encore utiliser des composés organoaluminiques obtenus en faisant réagir des trialkylaluminiums ou des hydrures de dialkylaluminium dont les radicaux comprennent jusqu'à 20 atomes de carbone avec des dioléfines comprenant de 4 à 20 atomes de carbone, et plus particulièrement les composés dénommés isoprénylaluminiums.

En général, on donne la préférence aux trialkylaluminiums et en particulier à ceux dont les chaînes alkyles sont droites et comprennent jusqu'à 18 atomes de carbone, plus particulièrement de 2 à 8 atomes de carbone. Le triéthylaluminium et le triisobutylaluminium sont préférés.

La quantité totale de composé organométallique mise en oeuvre dans le procédé de polymérisation de l'invention peut varier dans une large mesure. Elle est en général de 0,02 à 50 mmoles par litre de solvant, de diluant ou de volume de réacteur et de préférence de 0,2 à 2,5 mmoles par 1.

La quantité de catalyseur mise en oeuvre dans le procédé de polymérisation de l'invention est déterminée en fonction de la teneur en métal de transition dudit complexe. Elle est choisie en général de manière à ce que la concentration soit de 0,001 à 2,5 et de préférence de 0,01 à 0,25 mmole de métal de transition par litre de solvant, de diluant ou de volume de réacteur.

Le rapport molaire de la quantité totale du métal présent dans le composé organométallique à la quantité totale du métal de transition présent dans le composé d'un métal de transition est habituellement d'au moins 1, en particulier d'au moins 5, les valeurs d'au moins 10 étant avantageuses. Le rapport est en général d'au plus 100, de préférence d'au plus 75, les valeurs d'au plus 50 étant recommandées.

Le procédé de polymérisation de l'invention peut être effectué selon tout procédé connu, en solution dans un solvant qui peut être l'oléfine même à l'état liquide, ou en suspension dans un diluant hydrocarboné, ou encore en phase gazeuse. On obtient de bons résultats dans les polymérisations en suspension et en phase gazeuse.

La polymérisation est réalisée par mise en contact de l'oléfine avec le système catalytique comprenant le catalyseur, le composé organométallique et, le cas échéant, un donneur d'électrons. Ce dernier peut éventuellement être mis en oeuvre au stade de la fabrication du catalyseur, par exemple, après la formation du complex liquide et avant ou après l'étape de précipitation ou encore au stade de la polymérisation.

L'oléfine qui est polymérisée, peut être choisie parmi les oléfines contenant de 2 à 20 atomes de carbone, et de préférence de 2 à 6 atomes de carbone, telles que l'éthylène, le propylène, le butène-1, le 4-méthylpentène-1 et l'hexène-1. L'éthylène, le butène-1 et l'hexène-1 conviennent bien. L'éthylène est particulièrement préféré. On peut bien entendu mettre en oeuvre simultanément plusieurs oléfines différentes afin d'obtenir des copolymères, par exemple des mélanges de deux des oléfines citées ci-dessus ou d'une ou plusieurs de ces oléfines avec une ou plusieurs dioléfines comprenant de 4 à 20 atomes de carbone de préférence. Ces dioléfines peuvent être des dioléfines aliphatiques non conjuguées telles que l'hexadiène-1,4, des dioléfines monocycliques telles que le 4-vinylcyclohexène, le 1,3-divinylcyclohexane, le cyclopentadiène ou le cyclooctadiène-1,5, des dioléfines alicycliques ayant un pont endocyclique telles que le dicyclopentadiène ou le norbornadiène et les dioléfines aliphatiques conjugées telles que le butadiène et l'isoprène.

Le procédé selon l'invention s'applique particulièrement bien à la fabrication d'homopolymères de l'éthylène et de copolymères contenant au moins 90 % molaires d'éthylène et de préférence 95 % molaires d'éthylène et, notamment, de co- et terpolymères statistiques de l'éthylène et de butène et/ou d'hexène ou encore de copolymères à distribution bimodale des masses moléculaires obtenus par polymérisation séquencée de mélanges d'éthylène et de butène et/ou d'hexène.
Les exemples qui suivent sont destinés à illustrer l'invention.
Les exemples 1 et 3 sont conformes à l'invention. Dans l'exemple 1, on a fabriqué et mis en oeuvre à l'homopolymérisation de l'éthylène un catalyseur constitué d'une composition catalytique solide contenant du magnésium, du titane et du chlore déposée sur un support inorganique selon l'invention, ledit catalyseur étant obtenu selon le procédé décrit dans la demande de brevet WO-A-91/07443. Dans l'exemple comparatif 2, on a fabriqué et mis en oeuvre à l'homopolymérisation de l'éthylène dans des conditions identiques à celles de l'exemple 1 un catalyseur identique à celui de l'exemple 1 si ce n'est que le support a été remplacé par de la silice. Dans l'exemple 3, on a fabriqué et mis en oeuvre à l'homopolymérisation de l'éthylène un catalyseur constitué d'une composition catalytique solide contenant du magnésium, du titane et du chlore déposée sur un support inorganique selon l'invention, le catalyseur étant obtenu selon le procédé revendiqué dans la présente demande.

### Exemple 1

### 1.1 Préparation du catalyseur

3 g de MgCl₂ anhydre sont dissous dans environ 135 ml d'acétate d'éthyle. La solution obtenue est introduite dans un réacteur de 250 ml contenant déjà 10 g de support inorganique de composition Al(PO₄)₃ : SiO₂ : Al₂O₃ dans un pourcentage molaire de 33:33:33. Ce support qui a subi un traitement thermique préalable à 800°C pendant 16h, présente un diamètre moyen des particules de 129 µm, une surface spécifique de 267 cm²/g et un volume poreux de 2,11 cm³/g (mesures BET). Le support est mis en suspension sous agitation. La température est portée à 80°C et maintenue pendant 5 h. Le solvant est ensuite évaporé sous courant d'azote, toujours à 80°C.

Le support imprégné est remis en suspension dans de l'hexane frais. 82 ml d'une solution de triéthylaluminium à 10% en poids dans l'hexane sont ensuite introduits dans la suspension. La température est portée à 40°C et maintenue pendant une heure. Le support traité est lavé deux fois avec de l'hexane frais.

Une solution composée de 80 ml d'hexane et de 1,2 ml de TiCl₄ est ensuite introduite dans la suspension. La température est portée à 50°C et maintenue pendant 2 heures. Le support imprégné est finalement séché sous courant d'azote à 100°C.

Le catalyseur solide recueilli présente la composition suivante, exprimée en g/kg : Ti 22, Mg 52, Cl 212.

### 1.2. Polymérisation

1 l d'hexane est introduit dans un réacteur de 3 l, conditionné au préalable sous azote. 2 mmole de triéthylaluminium, en solution dans l'hexane à raison de 40g/l, sont introduites dans le réacteur, toujours sous protection d'azote. Le réacteur est fermé, mis sous agitation et porté à 85°C. A cette température sont introduits successivement par le ciel gazeux, de l'hydrogène, à une pression partielle de 2.5 bar, de l'éthylène, à une pression partielle de 6 bar. La pression totale s'élève à 9 bar.

Lorsque la température et la pression sont équilibrées, 60 mg du catalyseur obtenu en 1.1 sont introduits par surpression au départ d'un sas. La polymérisation démarre et est poursuivie pendant 73 minutes.

Le réacteur est refroidi, dégazé, et la suspension de polymère dans l'hexane est récupérée comme telle. Après évaporation de l'hexane, 443 g de polymère sont recueillis, ce qui correspond à une activité de 1010 g PE/g catalyseur.heure.bar d'éthylène. Les principales propriétés du polymère sont les suivantes :

| | |
|---|---|
| MI2* | 2.6 g/10min |
| Poids spécifique apparent non tassé | 277 kg/m³ |
| Diamètre moyen des particules | 902 µm |
| Fraction de particules inférieures à 125 µm | 3.3 % |

### Exemple 2 (comparatif)

### 2.1. Préparation du catalyseur

Le mode opératoire de l'exemple 1.1 est reproduit, si ce n'est que le support inorganique de composition A1(PO₄)₃ : SiO₂ : Al₂O₃ est remplacé par une silice préalablement traitée thermiquement à 815°C pendant 16 h. La silice mise en oeuvre a un diamètre moyen des particules de 30 µm, une surface spécifique de 310 cm²/g et un volume poreux de 1.56 cm³/g (mesures BET).

Le solide catalytique recueilli a la composition suivante, exprimée en g/kg : Ti 27, Mg 44, Cl 207.

### 2.2 Polymérisation

81 mg du solide catalytique ci-dessus sont mis en oeuvre à la polymérisation dans des conditions identiques à celles décrites en 1.2. La durée de polymérisation est cette fois de 95 minutes. 332g de polymère sont recueillis, ce qui correspond à une activité de 431 g PE/g catalyseur.heure.bar d'éthylène. Les principales propriétés du polymère sont les suivantes :

| | |
|---|---|
| MI2* | 1.2 g/10min |
| Poids spécifique apparent non tassé | 301 kg/m³ |
| Diamètre moyen des particules | 605 µm |
| Fraction de particules inférieures à 125 µm | 1.1 % |

### Exemple 3

### 3.1. Préparation du catalyseur.

13.0 ml d'un mélange homogène de diéthylate de Mg et de tétrabutylate de Ti (rapport molaire Ti/Mg de 0.4), dilué dans de l'hexane à raison de 1.14 mole de Mg par litre, sont introduits dans un réacteur en verre de 1 l. Le mélange homogène de diéthylate de Mg et de tétrabutylate de Ti a été préparé préalablement par chauffage sous agitation à 140°C pendant 5 h.

La solution homogène est mise sous agitation. Une quantité supplémentaire d'hexane est ajoutée pour porter le volume total à environ 110 ml. Sont ensuite ajoutés 17.7 g de support inorganique de composition Al(PO₄)₃ : SiO₂ : Al₂O₃ identique à celui mis en oeuvre dans l'exemple 1.

La température de la suspension est portée à 35°C. 30 ml d'une solution de 0.0349 mole de dichloréthylaluminium dans l'hexane sont introduits, à débit constant, sur une durée de 2 h, la température étant maintenue à 35°C. Le rapport molaire Al/Mg ainsi mis en oeuvre est de 2.35.

Après l'introduction, le solide en suspension est lavé 6 fois avec de l'hexane frais, par décantations/extractions successives, avec un rapport de dilution lors des lavages d'au moins 2.

Le solide est lavé et séché sous azote à 80°C. Le catalyseur solide recueilli présente la composition suivante, exprimée en g/kg : Ti 9.3, Mg 9.8, Cl 61

### 3.2 Polymérisation de l'éthylène

345 mg de catalyseur solide obtenu en 3.1. sont mis en oeuvre à la polymérisation de l'éthylène dans des conditions identiques à celles décrites en 1.2. La durée de la polymérisation a été de 62 minutes. 443 g de polymère sont recueillis, ce qui correspond à une activité de 160 g PE/g catalyseur.heure.bar d'éthylène. Les principales propriétés du polymère sont les suivantes :

| | |
|---|---|
| MI2* | 6.9 g/10min |
| Poids spécifique apparent non tassé | 346 kg/m³ |
| Diamètre moyen des particules | 638 µm |
| Fraction de particules inférieures à 125 µm | 9.9 % |
| MI2* = indice de fluidité d'une polyoléfine désignant le débit de la polyoléfine fondue à 190°C, qui s'écoule au travers d'une filière d'un diamètre de 2 mm et d'une longueur de 8 mm, sous l'action d'un piston lesté d'une masse de 2,16 kg, ce débit étant exprimé en g/10 min, suivant la norme ASTM D 1238 (1990). | |

## Revendications

1. Catalyseur destiné à la polymérisation des oléfines comprenant une composition catalytique solide à base de métal de transition, de magnésium et d'halogène déposée sur un support inorganique, **caractérisé en ce que** le support inorganique comprend du phosphate d'aluminium (A) et au moins un oxyde inorganique (B) choisi parmi la silice et l'alumine.

2. Catalyseur selon la revendication 1, **caractérisé en ce que** le support contient du phosphate d'aluminium (A) et un oxyde inorganique (B) choisi parmi la silice et l'alumine dans un pourcentage molaire (A):(B) de (90 à 5):(10 à 95).

3. Catalyseur selon la revendication 1, **caractérisé en ce que** le support contient du phosphate d'aluminium (X), de la silice (Y) et de l'alumine (Z) dans un pourcentage molaire (X) : (Y) : (Z) de (1 à 85) : (10 à 95) : (1 à 80)

4. Catalyseur selon l'une quelconque des revendications 1 à 3, **caractérisé en ce qu'**il contient au moins 2 g et pas plus de 100 g de métal de transition par kg.

5. Catalyseur selon l'une quelconque des revendications 1 à 4, **caractérisé en ce que** le métal de transition est choisi parmi le titane et le zirconium et leurs mélanges.

6. Procédé pour la fabrication d'un catalyseur selon la revendication 1, **caractérisé en ce que**, dans une première étape, on met en réaction au moins un composé de magnésium avec au moins un composé de métal de transition pour former un complexe liquide, on imprègne le support inorganique au moyen dudit complexe liquide et, dans une étape ultérieure, on précipite ledit complexe liquide sur le support au moyen d'un composé organoaluminique éventuellement halogéné pour recueillir un catalyseur.

7. Procédé selon la revendication 6, **caractérisé en ce que** le composé de magnésium est choisi parmi les composés organiques et les composés halogénés de magnésium, le métal de transition parmi les composés organiques et les composés halogénés d'un métal de transition du groupe IVB ou VB du tableau périodique et le composé organoaluminique éventuellement halogéné parmi les composés de formule AlRₙX₃₋ₙ dans laquelle R est un radical hydrocarboné contenant jusqu'à 20 atomes de carbone , X est de l'halogène et n est inférieur ou égal à 3.

8. Procédé selon les revendications 6 ou 7, **caractérisé en ce que** le composé de magnésium et le composé de métal de transition sont choisis parmi les composés qui ne contiennent par atome de magnésium, respectivement par atome de métal de transition, que des liaisons métal-oxygène-radical organique et/ou des liaisons métal-halogène à l'exclusion de toute autre liaison et **en ce que** le composé organoaluminique éventuellement halogéné est choisi parmi les composés organoaluminiques chlorés de formule AlRₙCl₃₋ₙ dans laquelle R est un radical hydrocarboné contenant jusqu'à 6 atomes de carbone et n ne dépasse pas 1,5.

9. Procédé pour la fabrication d'un catalyseur selon la revendication 8, **caractérisé en ce que** le composé de magnésium est le diéthylate de magnésium, le composé de métal de transition est le tétrabutylate de titane ou de zirconium et le composé organoaluminique chloré est choisi parmi le dichlorure d'éthylaluminium et le dichlorure d'isobutylaluminium.

10. Utilisation du catalyseur selon l'une quelconque des revendications 1 à 5, en combinaison avec un cocatalyseur choisi parmi les composés organométalliques des métaux des groupes IA, IIA, IIIA et IV A du tableau périodique pour la polymérisation des oléfines.

11. Utilisation selon la revendication 10, dans laquelle le cocatalyseur est choisi parmi les trialkylaluminiums dont les chaînes alkyles droites comprennent de 2 à 8 atomes de carbone et l'oléfine est de l'éthylène.

## Patentansprüche

1. Katalysator, bestimmt für die Polymerisation von Olefinen, umfassend eine feste katalytische Zusammensetzung auf der Basis von Übergangsmetall, Magnesium und Halogen, abgeschieden auf einem anorganischen Träger, **dadurch gekennzeichnet, dass** der anorganische Träger Aluminiumphosphat (A) und wenigstens ein anorganisches Oxid (B), das unter Siliciumdioxid und Aluminiumoxid ausgewählt ist, umfasst.

2. Katalysator gemäß Anspruch 1, **dadurch gekennzeichnet, dass** der Träger Aluminiumphosphat (A) und ein anorganisches Oxid (B), das unter Siliciumdioxid und Aluminiumoxid ausgewählt ist, in einem prozentualen Molverhältnis (A) : (B) von (90 bis 5) : (10 bis 95) enthält.

3. Katalysator gemäß Anspruch 1, **dadurch gekennzeichnet, dass** der Träger Aluminiumphosphat (X), Siliciumdioxid (Y) und Aluminiumoxid (Z) in einem prozentualen Molverhältnis (X) : (Y) : (Z) von (1 bis 85) : (10 bis 95) : (1 bis 80) enthält.

4. Katalysator gemäß einem der Ansprüche 1 bis 3, **dadurch gekennzeichnet, dass** er wenigstens 2 g und nicht mehr als 100 g Übergangsmetall pro kg enthält.

5. Katalysator gemäß einem der Ansprüche 1 bis 4, **dadurch gekennzeichnet, dass** das Übergangsmetall unter Titan und Zirkonium und ihren Gemischen ausgewählt ist.

6. Verfahren zur Herstellung eines Katalysators gemäß Anspruch 1, **dadurch gekennzeichnet, dass** man in einem ersten Schritt wenigstens eine Magnesiumverbindung mit wenigstens einer Übergangsmetallverbindung umsetzt, um einen flüssigen Komplex zu bilden, man den anorganischen Träger mit besagtem flüssigem Komplex tränkt und man in einem weiteren Schritt besagten flüssigen Komplex auf dem Träger mittels einer gegebenenfalls halogenierten aluminiumorganischen Verbindung fällt, um einen Katalysator zu gewinnen.

7. Verfahren gemäß Anspruch 6, **dadurch gekennzeichnet, dass** die Magnesiumverbindung unter den organischen Verbindungen und den halogenierten Verbindungen von Magnesium, das Übergangsmetall unter den organischen Verbindungen und den halogenierten Verbindungen eines Übergangsmetalls der Gruppe IVB oder VB des Periodensystems und die gegebenenfalls halogenierte aluminiumorganische Verbindung unter den Verbindungen der Formel AlRₙX₃₋ₙ, worin R ein Kohlenwasserstoffrest mit bis zu 20 Kohlenstoffatomen ist, X Halogen ist und n kleiner oder gleich 3 ist, ausgewählt ist.

8. Verfahren gemäß den Ansprüchen 6 oder 7, **dadurch gekennzeichnet, dass** die Magnesiumverbindung und die Übergangsmetallverbindung ausgewählt sind unter den Verbindungen, die pro Magnesiumatom beziehungsweise pro Übergangsmetallatom nur Bindungen Metall-Sauerstoff-organischer Rest und/oder Metall-Halogen-Bindungen unter Ausschluss jeglicher anderen Bindung enthalten, und dadurch, dass die gegebenenfalls halogenierte aluminiumorganische Verbindung ausgewählt ist unter den chlorierten aluminiumorganischen Verbindungen der Formel AlRₙCl₃₋ₙ, worin R ein Kohlenwasserstoffrest mit bis zu 6 Kohlenstoffatomen ist und n 1,5 nicht übersteigt.

9. Verfahren zur Herstellung eines Katalysators gemäß Anspruch 8, **dadurch gekennzeichnet, dass** die Magnesiumverbindung Magnesiumdiethylat ist, die Übergangsmetallverbindung Titan- oder Zirkoniumtetrabutylat ist und die chlorierte aluminiumorganische Verbindung ausgewählt ist unter Ethylaluminiumdichlorid und Isobutylaluminiumdichlorid.

10. Verwendung des Katalysators gemäß einem der Ansprüche 1 bis 5 in Kombination mit einem Cokatalysator, der ausgewählt ist unter den metallorganischen Verbindungen der Metalle der Gruppen IA, IIA, IIIA und IVA des Periodensystems, für die Polymerisation von Olefinen.

11. Verwendung gemäß Anspruch 10, worin der Cokatalysator ausgewählt ist unter den Trialkylaluminiumverbindungen, deren gerade Alkylketten 2 bis 8 Kohlenstoffatome umfassen, und das Olefin Ethylen ist.

## Claims

1. Catalyst intended for the polymerisation of olefins, comprising a solid catalytic composition based on transition metal, magnesium and halogen and deposited on an inorganic support, **characterised in that** the inorganic support comprises aluminium phosphate (A) and at least one inorganic oxide (B) chosen from silica and alumina.

2. Catalyst according to claim 1, **characterised in that** the support contains aluminium phosphate (A) and an inorganic oxide (B) chosen from silica and alumina in a molar percentage (A):(B) of (90 to 5):(10 to 95).

3. Catalyst according to claim 1, **characterised in that** the support contains aluminium phosphate (X), silica (Y) and alumina (Z) in a molar percentage (X) : (Y) : (Z) of (1 to 85) : (10 to 95) : (1 to 80).

4. Catalyst according to any one of claims 1 to 3, **characterised in that** it contains at least 2 g and not more than 100 g of transition metal per kg.

5. Catalyst according to any one of claims 1 to 4, **characterised in that** the transition metal is chosen from titanium and zirconium and their mixtures.

6. Process for the manufacture of a catalyst according to claim 1, **characterised in that**, in a first stage, at least one magnesium compound is reacted with at least one transition metal compound in order to form a liquid complex, the inorganic support is impregnated by means of said liquid complex and, in a subsequent stage, said liquid complex is precipitated onto the support by means of an optionally halogenated organoaluminium compound in order to collect a catalyst.

7. Process according to claim 6, **characterised in that** the magnesium compound is chosen from organic compounds and halogenated magnesium compounds, the transition metal from organic compounds and halogenated compounds of a transition metal of Group IVB or VB of the Periodic Table and the optionally halogenated organoaluminium compound from compounds of formula AlRₙX₃₋ₙ in which R is a hydrocarbon radical containing up to 20 carbon atoms, X is halogen and n is less than or equal to 3.

8. Process according to claim 6 or 7, **characterised in that** the magnesium compound and the transition metal compound are chosen from compounds which contain per atom of magnesium, respectively per atom of transition metal, only metal-oxygen-organic radical bonds and/or metal/halogen bonds to the exclusion of any other bond and **in that** the optionally halogenated organoaluminium compound is chosen from chlorinated organoaluminium compounds with the formula AlRₙCl₃₋ₙ in which R is a hydrocarbon radical containing up to 6 carbon atoms and n does not exceed 1.5.

9. Process for the manufacture of a catalyst according to claim 8, **characterised in that** the magnesium compound is magnesium diethylate, the transition metal compound is titanium or zirconium tetrabutylate and the chlorinated organoaluminium compound is chosen from ethyl aluminium dichloride and diisobutyl aluminium dichloride.

10. Use of the catalyst according to any one of claims 1 to 5, in combination with a co-catalyst chosen from the organometallic compounds of metals of Groups IA, IIA, IIIA and IVA of the Periodic Table for the polymerisation of olefins.

11. Use according to claim 10, in which the co-catalyst is chosen from trialkyl aluminiums whose straight alkyl chains contain from 2 to 8 carbon atoms and whose olefin is ethylene.
